# EUROPÄISCHE PATENTSCHRIFT

(11) **EP 0 582 051 B1**
(45) Veröffentlichungstag und Bekanntmachung des Hinweises auf die Patenterteilung: **04.03.1998**
(21) Anmeldenummer: 93108206.9
(22) Anmeldetag: 19.05.1993
(51) Int. Cl.: G05B 19/10, D06F 33/02, A47L 15/46

(54) **Automatisch gesteuertes Haushaltgerät**
Automatically controlled household appliance
Appareil électro-ménager à commande automatique

(30) Priorität: 04.08.1992 DE 4225768
(43) Veröffentlichungstag der Anmeldung: 09.02.1994
(73) Patentinhaber: BOSCH-SIEMENS HAUSGERÄTE GmbH, 81669 München (DE)
(72) Erfinder: Meerpohl, Hansjörg, Dipl.-Ing., W-1000 Berlin 21 (DE)

(56) Entgegenhaltungen:
- EP-A- 0 055 159
- GB-A- 2 234 366
- US-A- 4 084 237
- PATENT ABSTRACTS OF JAPAN vol. 14, no. 74 (C-0687) 13. Februar 1990 & JP-A-01 291 896 (NIPPON KENTETSU CO. LTD.) 24. November 1989
- PATENT ABSTRACTS OF JAPAN vol. 16, no. 503 (M-1326) 16. Oktober 1992 & JP-A-04 185 472 (FUJITSU LTD.) 2. Juli 1992

## Beschreibung

Die Erfindung betrifft ein automatisch gesteuertes Haushaltgerät, insb. Geschirrspül-, Wasch- oder Trockenmaschine, mit einem elektronischen Steuergerät mit mindestens einem Mikrocomputer und mindestens einem nicht-flüchtigen Speicher vom Schreib-Lese-Typ, in den herstellerseitig Grundwerte für Parameter für die Ausführung von wählbaren Programmsequenzen eingespeichert sind, und mit Einstellhandhaben zum wahlweisen Verändern von Parameterwerten.

Derartige automatisch gesteuerte Haushaltgeräte sind heute bereits handelsüblich. Sie enthalten herstellerseitig vorgegebene Programmsequenzen, die je nach Kundenwunsch über Einstellhandhaben in gewissen Parametern gemäß den Wünschen einzelner Kunden wahlweise verändert werden können. Beispielsweise können bei Wasch- und Geschirrspülmaschinen Laugenstände und Temperaturen, mit oder ohne Vorwäsche bzw. Vorspülen, Kurzprcgrammlauf, Schongang, bei Waschmaschinen die Schleuderdrehzahlen, bei Wäschetrocknern die Endrestfeuchte und ähnliches an Programmparametern mittels Einstellhandhaben gemäß Kundenwunsch individuell verändert werden.

Aus der US-A-4 084 237 ist ein Steuergerät für eine Waschmaschine bekannt, das bestimmte Waschprogramme nach dem Drücken einer bestimmten Taste aus einer Reihe von Instruktionen für die Waschmaschinensteuerung zusammensetzt und abarbeitet. Von einer sehr großen Anzahl von gespeicherten Programmen wird dem Benutzer nur eine kleine Zahl über Tasten angeboten. Diese Vorauswahl geschieht durch dem Benutzer nicht zugängliche Schalter.

Ein Ziel der Erfindung ist die Vereinfachung der Eingabehandlungen in bezug auf immer wiederkehrende, einem spezifischen Kundenverhalten entsprechende Veränderungswünsche durch eine entsprechende Vorbereitung im Programmsteuergerät zu ermöglichen.

Erfindungsgemäß wird diese Aufgabe dadurch gelöst, daß das Steuergerät gewählte Werte bestimmter Parameter speichert und nach Häufigkeit klassifiziert und die Werte eines oder von mehreren Parametern durch je einen gewählten Wert ersetzt, wenn dieser in vorbestimmtem Maße häufig gewählt worden ist. Hierdurch kann die Maschinensteuerung "lernen", welche besonderen Programmzusammenstellungen der Kunde am häufigsten wählt und vor allem, ob das Behandlungsergebnis den Vorstellungen des Kunden über seine spezifische Programmeingabe entspricht.

Letzteres läßt sich insb. durch eine Weiterbildung der Erfindung besonders vorteilhaft erreichen, bei der die Wahl eines Parameterwertes auch nachträglich durch Einleitung eines Nachbehandlungsprogrammes registrierbar ist. Hat nämlich der Kunde beispielsweise nach Ablauf eines eingewählten und abgelaufenen Programmes eines Wäschetrockners festgestellt, daß der Wäscheposten feuchter war, als der Kunde es sich vorgestellt hatte, dann wird der Kunde die Wäsche in den Trockner zurücklegen und einen Nachtrockenvorgang starten. Hierdurch kann die beim letzten Behandlungsvorgang vom Kunden gewählte Programm- und Funktionssequenz nicht nur einfach registriert und beim nächsten Behandlungswunsch automatisch wieder angeboten werden, diese registrierte Sequenz kann sogar anhand von Nachbehandlungsabläufen im Hinblick auf den daraus ersichtlichen Kundenwunsch parameterspezifisch variiert werden.

In einer Weiterbildung der Erfindung kann diese Variation auch nur darin bestehen, eine Parameter-Wert-Veränderung durch einen Befehl einzuleiten, daß der jeweils bestimmte Parameterwert zu vergrößern oder zu verkleinern ist, ohne daß vom Kunden eine Angabe erwartet wird, wie groß diese Veränderung zu sein hat. Die Steuerung wählt von sich aus die Größe einer Verkleinerung oder Vergrößerung des Parameterwertes aus und bietet sie im Rahmen einer Programmsequenz bei der nächsten Programmanforderung automatisch an. Die Veränderung einzelner Programm-Parameterwerte kann auch dadurch geschehen, daß dem Kunden nach dem Einschalten eines Programms oder am Programmende Parameterwerte angezeigt werden und die Steuerung einzelne Kundenbefehle aufnimmt, die beispielsweise in den Befehlen "wärmer" oder "kälter" bestehen, wenn es um bestimmte Temperaturwerte im Programm geht, oder in "feuchter" oder "trockener" in bezug auf den Endzustand eines Schleuderlaufes oder eines Trockenvorganges oder "lauter" oder "leiser" bei der Frage der Hörbarkeit des Programmende-Signals. Hat der Kunde im Anschluß an das danach abgelaufene Programm den Eindruck, daß der korrigierte Parameter-Wert noch immer nicht seinen Vorstellungen entspricht, dann kann dieser Lernprozess wiederholt werden.

Eine vorteilhafte Variante für eine Weiterbildung der Erfindung besteht auch darin, daß ganze Programmsequenzen speicherbar und miteinander vergleichbar sind und ab einer gewissen Häufigkeit der Übereinstimmung untereinander als modifizierte Standardprogramme anbietbar sind. Dies kommt insb. für Waschmaschinen in Betracht, bei denen eine große Vielzahl von unterschiedlichen Programmsequenzen einstellbar ist, aus denen der Kunde häufig nur wenige unterschiedliche Programmzusammenstellungen auswählt.

Herstellerseitig eingegebene und/oder nachträglich vom Kunden eingewählte Werte bestimmter Parameter oder ganze Programmsequenzen sind in einem EEPROM-Speicher ablegbar und können dort vom Mikroprozessor abgerufen bzw. neu eingespeichert oder mit veränderten Werten eingespeichert werden. Diese Daten bleiben in einem solchen nicht-flüchtigen Speicher vom Schreib-Lese-Typ auch nach dem Ausschalten des Haushaltgerätes bzw. bei Unterbrechung der Stromversorgung erhalten.

## Patentansprüche

1. Automatisch gesteuertes Haushaltgerät, insb. Geschirrspül-, Wasch- oder Trockenmaschine, mit einem elektronischen Steuergerät mit mindestens einem Mikrocomputer und mindestens einem nicht-flüchtigen Speicher vom Schreib-Lese-Typ, in den herstellerseitig Grundwerte für Parameter für die Ausführung von wählbaren Programmsequenzen eingespeichert sind, und mit Einstellhandhaben zum wahlweisen Verändern von Parameterwerten, durch den Benutzer, **dadurch gekennzeichnet**, daß das Steuergerät gewählte Werte bestimmter Parameter speichert und nach Häufigkeit klassifiziert und die Werte eines oder mehrerer Parameter durch je einen gewählten Wert ersetzt, wenn dieser in vorbestimmtem Maße häufig gewählt worden ist.

2. Haushaltgerät nach Anspruch 1, dadurch gekennzeichnet, daß die Wahl eines Parameter-Wertes auch nachträglich durch Einleitung eines Nachbehandlungsprogrammes registrierbar ist.

3. Haushaltgerät nach Anspruch 1 oder 2, dadurch gekennzeichnet, daß eine Parameter-Wert-Veränderung durch einen Befehl einleitbar ist, den Parameterwert zu vergrößern oder zu verkleinern.

4. Haushaltgerät nach einem der vorstehenden Ansprüche, dadurch gekennzeichnet, daß ganze Programmsequenzen speicherbar und miteinander vergleichbar sind und ab einer gewissen Häufigkeit der Übereinstimmung untereinander als modifizierte Standardprogramme anbietbar sind.

## Claims

1. Automatically controlled household appliance, especially dishwashing, washing or drying machine, with an electronic control apparatus with at least one microcomputer and at least one non-volatile storage device of write-read type, in which basic values for parameters for the performance of selectable program sequences are stored at the manufacturer, and with adjusting means for selectable changing of parameter values by the user, characterised thereby that the control apparatus stores selected values of specific parameters and classifies them according to frequency and replaces the values of one or more parameters by a respective selected value when this has become selected more frequently to a predetermined degree.

2. Household appliance according to claim 1, characterised thereby that the selection of a parameter value is also subsequently registrable by initiation of a post-treatment program.

3. Household appliance according to claim 1 or 2, characterised thereby that a parameter value change can be initiated by a command to increase or decrease the parameter value.

4. Household appliance according to one of the preceding claims, characterised thereby that entire program sequences can be stored and compared with one another and can be offered as modified standard programs from a certain frequency of the correspondence with one another.

## Revendications

1. Appareil électroménager à commande automatique, notamment machine à laver la vaisselle, machine à laver ou machine à sécher le linge, pourvu d'un dispositif de commande électronique comprenant au moins un microprocesseur et au moins une mémoire non volatile à écriture et lecture dans laquelle le fabricant a mémorisé des valeurs de base pour des paramètres en vue de l'exécution de séquences de programmes sélectionnables, et avec des moyens de réglage permettant la modification facultative de valeurs des paramètres par l'utilisateur, caractérisé en ce que le dispositif de commande mémorise des valeurs sélectionnées de paramètres déterminés et les classe en fonction de leur fréquence, et remplace les valeurs d'un ou de plusieurs paramètre/s, respectivement, par une valeur sélectionnée lorsque celle-ci a été sélectionnée avec une fréquence prédéterminée.

2. Appareil électroménager selon la revendication 1, caractérisé en ce que le choix d'une valeur de paramètre peut également être enregistré ultérieurement grâce à l'introduction d'un programme de traitement ultérieur.

3. Appareil électroménager selon l'une des revendications 1 ou 2, caractérisé en ce qu'une modification d'une valeur de paramètre peut être introduite grâce à une instruction ordonnant d'augmenter ou de diminuer la valeur du paramètre.

4. Appareil électroménager selon l'une des revendications précédentes, caractérisé en ce que des séquences entières de programme peuvent être mémorisées et comparées les unes aux autres et, à partir d'une certaine fréquence de concordance les unes par rapport aux autres, être proposées en tant que programmes standard modifiés.
